# EUROPEAN PATENT APPLICATION

(11) **EP 3 048 467 A1**
(43) Date of publication of application: **27.07.2016**
(21) Application number: 14845081.0
(22) Date of filing: 04.06.2014
(51) Int. Cl.: G02B 27/01, G02B 3/00, G03B 21/14, G09F 9/00

(54) **IMAGE DISPLAY DEVICE**

(30) Priority: 17.09.2013 JP 2013191664
(71) Applicant: JVC Kenwood Corporation, Yokohama-shi, Kanagawa 221-0022 (JP)
(72) Inventor: KOBAYASHI, Tatsuru, Yokohama-shi Kanagawa 221-0022 (JP); KOBAYASHI, Manabu, Yokohama-shi Kanagawa 221-0022 (JP)
(74) Representative: Schmidbauer, Andreas Konrad
(86) International application number: PCT/JP2014/002978
(87) International publication number: WO 2015/040776

(57) **Abstract**

An image display apparatus includes an image projection unit (210) that projects image display light, an intermediate image forming unit (360) that forms a real image based on the image display light projected from the image projection unit (210), and a projection mirror (400) that reflects the image display light, which has passed through the intermediate image forming unit (360), toward the surface for presenting a virtual image. The intermediate image forming unit (360) has a first means that controls the direction of a chief ray of the image display light, which has passed through the intermediate image forming unit (360), and a second means that controls the light distribution angle of the chief ray. The first means may be a concave lens, and the second means may be a diffusing screen that diffuses the image display light, which has passed through the intermediate image forming unit. The diffusing screen includes a base member having a main surface and a plurality of diffusion beads provided on the main surface, and may be arranged in an orientation such that the image display light projected enters the main surface.

## Description

### [Technical Field]

The present invention relates to an image display apparatus.

### [Background Art]

An automotive display apparatus, which is called a head-up display, is known in the art. The head-up display is a display apparatus that displays items of information such that the items of information are being superimposed on an outside scenery. The head-up display transmits the light entering from the exterior of a vehicle and, simultaneously, reflects an image projected from an optical unit placed inside the vehicle on a windshield and the like. The head-up display can have the driver of the vehicle visually recognize the information on the image projected from the optical unit while the driver seeing and observing the outside scenery in front of him/her almost never needs to change his/her line of sight and focusing point. Thus, the head-up display is recently attracting attentions as a display apparatus for use in a vehicle.

In the head-up display mounted on a dashboard of the vehicle, disclosed is a structure where the projection angle of display light can be adjusted by moving a driven mirror that guides the display light into the windshield of the vehicle (see Patent Document 1, for instance).

### [Related Art Documents]

### [Patent Documents]

[Patent Document 1] Japanese Unexamined Patent Application Publication 2013-125193.

### [Disclosure of Invention]

### [Problems to be Solved by the Invention]

Since the position and space available for the installation of the head-up display are generally limited in most cases, the apparatus is preferably compact-sized. However, such a smaller size may degrade the visibility of display light.

The present invention has been made under the foregoing circumstances, and a purpose thereof is to provide an image display apparatus that is both compact-sized and has a high visibility.

### [Means for Solving the Problem]

An image display apparatus according to one embodiment of the present invention includes: an image projection unit that projects image display light; an intermediate image forming unit that forms a real image based on the image display light projected from the image projection unit; and a projection mirror that reflects the image display light, which has passed through the intermediate image forming unit, toward a surface for presenting a virtual image. The intermediate image forming unit has a first means that controls a direction of a chief ray of the image display light, which has passed through the intermediate image forming unit, and a second means that controls a light distribution angle of the chief ray thereof.

### [Effects of the Invention]

By employing this image display apparatus, the visibility of display light can be enhanced while the apparatus is downsized.

### [Brief Description of Drawings]

FIG. 1 schematically shows an installation mode of a head-up display according to an embodiment of the present invention;
FIG. 2 shows an internal structure of an optical unit;
FIG. 3 is a diagram schematically showing an internal structure of an image projection unit;
FIG. 4 is a diagram showing a light path of image display light projected onto a windshield;
FIG. 5 is a diagram showing light paths of image display light when a virtual image is presented to viewpoints of different heights;
FIG. 6 is a diagram showing image display light distributed by an intermediate image forming unit;
FIG. 7 shows an intermediate image forming unit according to a first modification;
FIGS. 8A and 8B each shows a relation between an angle of light entering a diffusion screen and angles of light transmitting through the diffusion screen; and
FIG. 9 shows an intermediate image forming unit according to a second modification.

### [Modes for Carrying Out the Invention]

Embodiments of the present invention will now be described with reference to the Figures. Specific numerical values and so forth shown in the embodiments are only exemplary for ease of understanding of the present invention and does not intend to limit the scope of the present invention unless otherwise stated accordingly. The components and functions practically identical to or equivalent to those shown in the disclosed patent specification and each Figure are given the same reference numerals or symbols, and the repeated explanation thereof is omitted. Also, the depiction of components or elements not directly related to the embodiments of the present invention is omitted in the Figures.

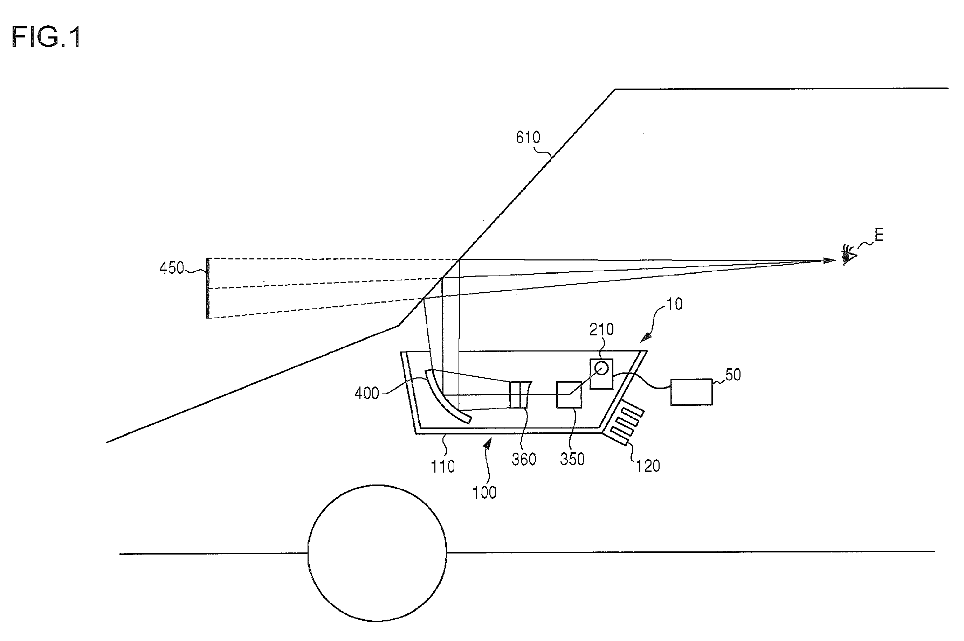

A description is given of a head-up display (HUD) 10 to be installed for use in the dashboard of a vehicle as an example of a display apparatus according to an embodiment. FIG. 1 schematically shows an installation mode of the head-up display 10 according to an embodiment of the present invention. The head-up display 10 includes an optical unit 100 and a control unit 50. FIG. 1 illustrates a case of use in which the optical unit 100 is disposed in the left-hand dashboard relative to the traveling direction of the vehicle (leftward direction in FIG. 1). The embodiment as described hereinafter represents an example in which the head-up display 10 is disposed for a driver in a left-hand drive car. Note that for an application in a right-hand drive car, the internal structure of the optical unit 100 should only be inverted horizontally relative to the traveling direction of the vehicle. Hereinbelow, an outline of the head-up display 10 is described with reference to FIG. 1.

The control unit 50, which includes not-shown CPU (Central Processing Unit), generates image signals for display at the optical unit 100. The control unit 50, which also includes not-shown interface for external inputs, can receive inputs of image signals outputted by an external device such as a navigation unit or a media reproducing unit, perform predetermined processing on the inputted signals, and produce outputs to the optical unit 100.

The optical unit 100 generates image display light to be displayed as a virtual image 450 on a windshield 610 using the image signals generated by the control unit 50. To accomplish this, the optical unit 100 has an image projection unit 210, an intermediate mirror 350, an intermediate image forming unit 360, and a projection mirror 400 within a housing 110.

The image projection unit 210 houses a light source, an image display element, and various optical lenses. The image projection unit 210 projects image display light generated from the image signals outputted by the control unit 50. In the present embodiment, as described by way of example, a liquid crystal on silicon (LCOS), which is a reflective LCD panel, is used as the image display element. However, DMD (Digital Micromirror Device) may be used as the image display element instead. In such a case, an optical system and a drive circuit to be used must be compatible with the display element employed.

The image display light projected by the image projection unit 210 is reflected by the intermediate mirror 350. The image display light reflected by the intermediate mirror 350 has its image formed by the intermediate image forming unit 360. The image display light of a real image formed at the intermediate image forming unit 360 passes therethrough and is projected onto the projection mirror 400.

The projection mirror 400, which is a concave mirror, magnifies the image display light having passed through the intermediate image forming unit 360 and projects the magnified image display light onto the windshield 610. The image display light projected on the windshield 610 is reflected by the windshield 610 into a light path heading for the user. A user E, who is the driver, recognizes the image display light reflected by the windshield 610 as a virtual image 450 ahead of the windshield 610 in the line of his/her sight.

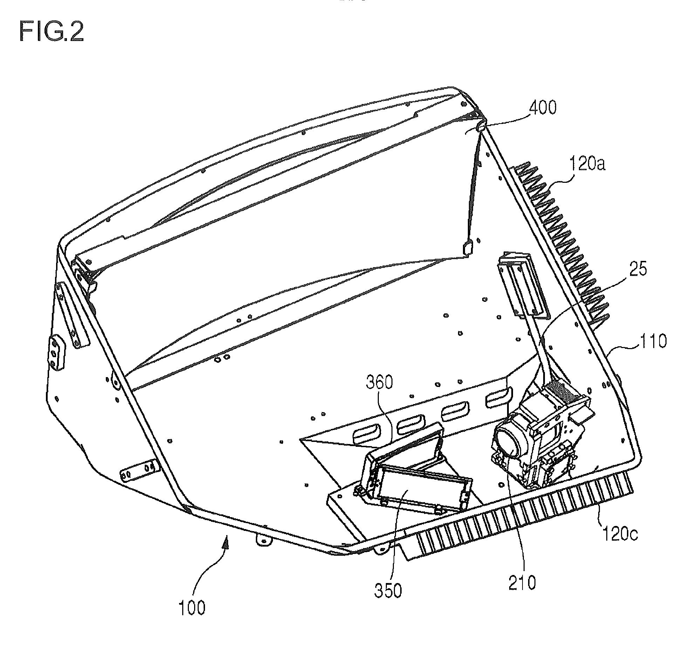

FIG. 2 shows an internal structure of the optical unit 100 according to an embodiment of the present invention. Hereinbelow, a description is given of the internal structure of the optical unit 100.

As already described, the optical unit 100 has an image projection unit 210, an intermediate mirror 350, an intermediate image forming unit 360, and a projection mirror 400 within its housing 110. Although the detail will be discussed later, the image projection unit 210 has three different kinds of light sources that emit red, green, and blue lights, respectively. The light sources can be realized by the use of LED (Light Emitting Diode) or semiconductor laser light sources. In the present embodiment, however, a description is given of a case where LED is used as the light sources.

The light sources generate heat in their operation. Thus the optical unit 100 has heatsinks to cool the light sources. To cool the three kinds of light sources, a heatsink 120a to be connected to the red light source, a heatsink 120b (not shown) to be connected to the green light source, and a heatsink 120c to be connected to the blue light source are disposed on the outside of the housing 110 of the optical unit 100.

The housing 110 is a die casting of aluminum. Note that the heatsink 120b and the heatsink 120c for cooling the blue light source and the green light source, respectively, are both integrally structured with the housing 110. In contrast to this, the heatsink 120a for cooling the red light source is installed in a position spatially away from the heatsink 120b and the heatsink 120c and is externally attached to the housing 110. Accordingly, the heat generated by the red light source is conducted to the heatsink 120a through a heat pipe 25.

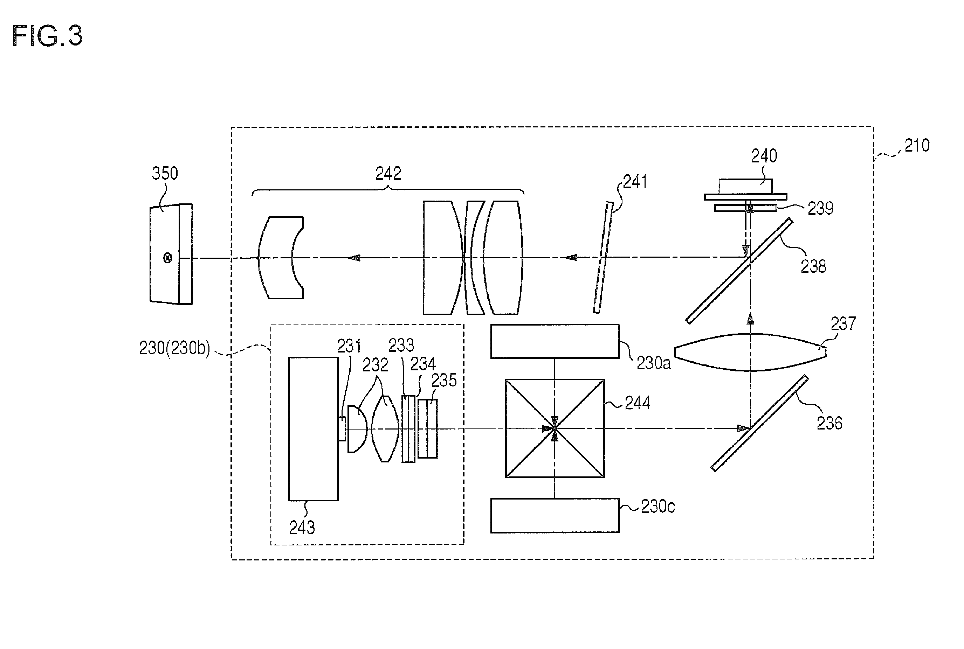

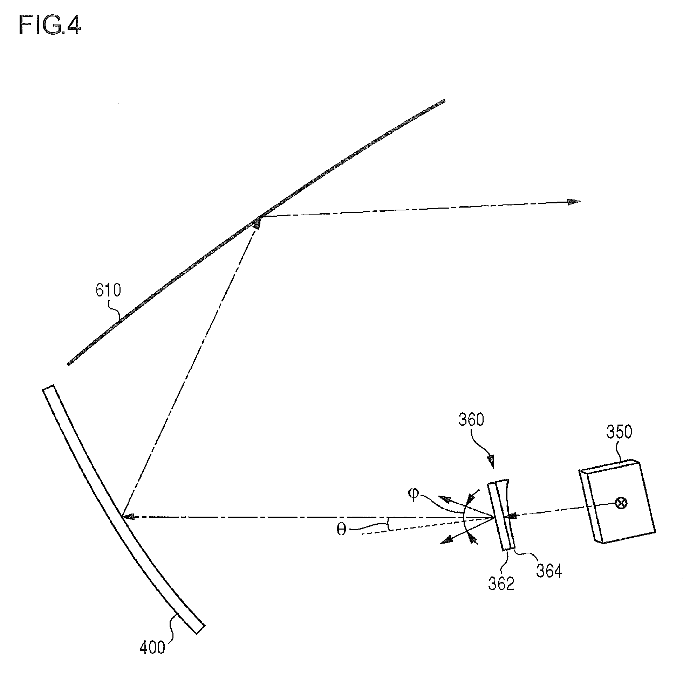

Now, with reference to FIG. 3 and FIG. 4, a description is given of the optical system of a head-up display 10. FIG. 3 is a diagram schematically showing an internal structure of the image projection unit 210 together with the light paths of the image display light. FIG. 4 is a diagram showing the light path of the image display light projected onto the windshield 610 via the intermediate mirror 350, the intermediate image forming unit 360, and the projection mirror 400.

Now, with reference to FIG. 3, a description is given of an internal structure of the image projection unit 210. The image projection unit 210 includes illuminators 230a, 230b and 230c (hereinafter generically referred to as "illuminators 230" or "illuminator 230" also), a dichroic cross prism 244, a reflecting mirror 236, a field lens 237, a polarization beam splitter 238, a wave plate 239, an analyzer 241, and a projection lens group 242. It is to be noted that the internal structure of the second illuminator 230b only is shown in FIG. 3 and the internal structures of the first and third illuminators 230a and 230c are not shown. However, it should be understood that all the illuminators 230 have an identical structure.

The illuminators 230 each include a light source 231, collimate lenses 232, an ultraviolet-infrared ray (UV-IR) cut filter 233, a polarizer 234, and a fly-eye lens 235. The light source 231 is comprised of a light-emitting diode that emits a light of red, green, or blue. The first illuminator 230a has a light-emitting diode emitting red light as the light source. The second illuminator 230b has a light-emitting diode emitting green light as the light source 231. The third illuminator 230c has a light-emitting diode emitting blue light as the light source.

The light source 231 is attached to a light source mounting base 243. The light source mounting base 243, which is thermally coupled to a not-shown heatsink, radiates heat caused by light emission of the light source 231. The light emitted by the light source 231 is turned into parallel light by collimate lenses 232. The UV-IR cut filter 233 removes the ultraviolet light and the infrared light by absorbing them from the parallel light that has passed through the collimate lenses 232. The polarizer 234 converts the light, which has passed through the UV-IR cut filter 233, into stable p-polarized light. Then the fly-eye lens 235 adjusts the light, which has passed through the polarizer 234, such that the brightness thereof is evenly distributed.

The lights having passed through the fly-eye lens 235 of the respective illuminators 230 are led into the dichroic cross prism 244 from different directions. The red, green, and blue lights having entered the dichroic cross prism 244 are synthesized into white light, which is directed to the reflecting mirror 236. The reflecting mirror 236 changes the direction of the light path of the white light synthesized by the dichroic cross prism 244 by 90 degrees. The light reflected by the reflecting mirror 236 is condensed by a field lens 237. The light condensed by the field lens 237 is sent to the image display element 240 by way of the polarization beam splitter 238 and the wave plate 239 which transmit the p-polarized light.

The image display element 240 has a red color filter, a green color filter, and a blue color filter for each pixel. The light incident on the image display element 240 is turned into colors associated with the respective pixels, which are then modulated by a liquid crystal composition in the image display element 240 to become s-polarized image display light to be directed to the polarization beam splitter 238. The thus emitted s-polarized light is reflected by the polarization beam splitter 238, thereby changing its light path. And after passing through the analyzer 241, the s-polarized light enters the projection lens group 242. The image display light, which has passed through the projection lens group 242, exits the image projection unit 210 and then enters the intermediate mirror 350.

Now, with reference to FIG. 4, a description is given of the light path of the image display light leading from the intermediate mirror 350 and projected onto the windshield 610 after passing through the intermediate image forming unit 360 and the projection mirror 400. The light path of the image display light exiting the projection lens group 242 of the image projection unit 210 is changed into the light path heading toward the projection mirror 400 by the intermediate mirror 350. On this light path, a real image based on the image display light reflected by the intermediate mirror 350 is formed by the intermediate image forming unit 360.

The intermediate image forming unit 360 has a diffusing screen 362 and a concave lens 364. The diffusing screen 362, as a second means constituting the intermediate image forming unit 360, forms a real image based on the image display light passing through the intermediate image forming unit 360 and at the same time controls the light distribution angle ψ of the image display light heading toward the projection mirror 400. The concave lens 364, as a first means constituting the intermediate image forming unit 360, controls the direction of the chief ray of the image display light heading toward the projection mirror 400 and adjusts the angle θ of the image display light formed between before and after its passage through the intermediate image forming unit 360.

The image display light having passed through the intermediate image forming unit 360 is reflected by the projection mirror 400 to be projected onto the windshield 610. The image display light projected on the windshield 610 is directed by the windshield 610 into a light path heading for the user. As a result, the user can visually recognize a virtual image based on the image display light ahead through the windshield 610. Accordingly, the windshield 610 has a function of a surface for presenting a virtual image.

With a structure implemented as described above, the user can visually recognize a virtual image based on the image signals outputted from the control unit 50 in superposition on actual scenery through the windshield 610.

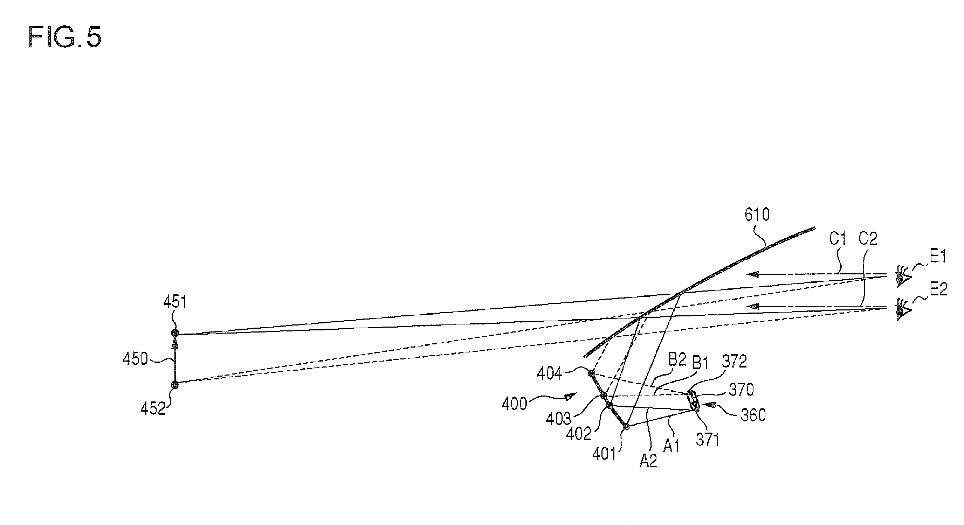

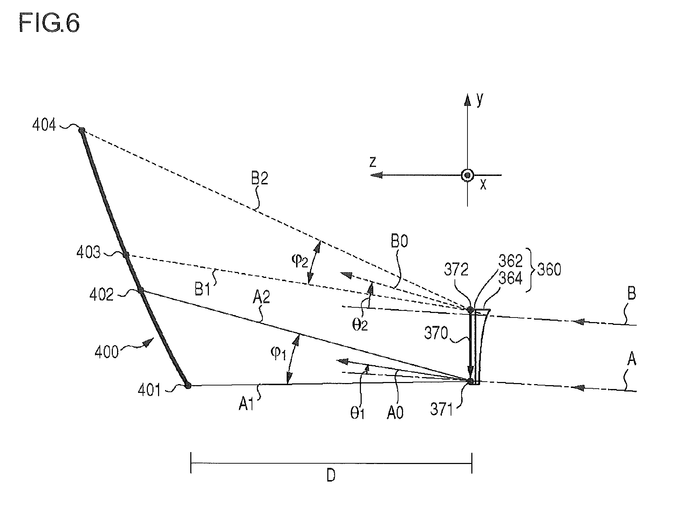

Now, with reference to FIG. 5 and FIG. 6, a detailed description is given of the function of the intermediate image forming unit 360 according to the present embodiment. FIG. 5 is a diagram showing light paths of image display light when a virtual image 450 is presented to viewpoints E1 and E2 of different heights. FIG. 6 is a diagram showing image display light distributed by the intermediate image forming unit 360, which shows in closeup the light paths between the intermediate image forming unit 360 and the projection mirror 400 in FIG. 5.

As shown in FIG. 5, the viewpoints E1 and E2 of the users, who are drivers, vary vertically depending on the height and seating position of the driver. It is preferable, however, that the whole of the virtual image 450 from an upper end 451 to a lower end 452 thereof can be visually recognized even when the viewpoint of the user varies. Also, the virtual image 450 should be presented in a position slightly dislocated vertically, not dead ahead in the line of sight C1 or C2 directed frontward of the vehicle. This makes it easier for the user to see the virtual image 450 when necessary by shifting his/her line of sight slightly.

In the present embodiment, therefore, a diffusing screen 362 and a concave lens 364 are combined as the intermediate image forming unit 360. As a result, the visibility of the virtual image 450 can be enhanced by controlling the direction of the chief ray and the light distribution angle of the image display light having passed through the intermediate image forming unit 360. In particular, the virtual image 450 can be presented in a position offering better visibility with the concave lens 364 located in a vertically decentered position that shifts the position of the virtual image 450 vertically. It is to be noted that in the present embodiment, an arrangement is disclosed in which the virtual image 450 is presented in a lower position relative to the line of sight C1 or C2. However, the arrangement may be such that the virtual image 450 is presented in a different position by changing the measure of decentering of the concave lens 364.

Now, with reference to FIG. 5, a detailed description is given of a difference in the path of image display light due to the difference between the viewpoints E1 and E2. The first viewpoint E1 is the upper limit position from which the whole of the virtual image 450 can be visually recognized, whereas the second viewpoint E2 is the lower limit position from which the whole of the virtual image 450 can be visually recognized. Hence, as long as the viewpoint is within the range between the first viewpoint E1 and the second viewpoint E2, the user can visually recognize the whole of the virtual image 450.

In FIG. 5, light A1 and light A2 indicated by solid lines represent the rays of light that present the upper end 451 of the virtual image 450 to the user. The light emitted from an upper end 371 of a real image 370 formed at the intermediate image forming unit 360 is reflected by the projection mirror 400 and the windshield 610 and reaches the viewpoints E1 and E2 of the user. The light A1 heading for the first viewpoint E1 is reflected at a first reflection point 401 of the projection mirror 400, and the light A2 heading for the second viewpoint E2 is reflected at a second reflection point 402 of the projection mirror 400. It is to be noted that in the optical system as described in the present embodiment, a vertically inverted real image is formed at the intermediate image forming unit 360 because of the arrangement of the image display light being reflected by the projection mirror 400 and the windshield 610.

On the other hand, light B1 and light B2 indicated by broken lines represent the rays of light that present the lower end 452 of the virtual image 450 to the user. The light emitted from a lower end 372 of the real image 370 formed in the intermediate image forming unit 360 is reflected by the projection mirror 400 and the windshield 610 and reaches the viewpoints E1 and E2 of the user. The light B1 heading for the first viewpoint E1 is reflected at a third reflection point 403 of the projection mirror 400, and the light B2 heading for the second viewpoint E2 is reflected at a fourth reflection point 404 of the projection mirror 400.

Now, with reference to FIG. 6, a detailed description is given of the image display light distributed vertically by the intermediate image forming unit 360. FIG. 6 shows in closeup the light paths between the intermediate image forming unit 360 and the projection mirror 400 in FIG. 5. The light A formed as the upper end 371 of the real image 370 enters the concave lens 364 and passes through it with its direction changed upward (y direction) by an angle θ₁ with respect to a direction (z direction) perpendicular to the diffusing screen 362. After that, the light A is formed as a real image in the diffusing screen 362, then is diffused and heads toward the projection mirror 400 as an image display light having a light distribution angle ψ₁. As a result, the light A incident on the intermediate image forming unit 360 becomes an image display light distributed between the light A1 heading for a first reflection point 401 and the light A2 heading for a second reflection point 402 with a chief ray A0 at its center.

In a similar manner, the light B formed as the lower end 372 of the real image 370 enters the concave lens 364 and passes through it with its direction changed upward (y direction) by an angle θ₂. After that, the light B is formed as a real image at the diffusing screen 362, then is diffused and heads toward the projection mirror 400 as an image display light having a light distribution angle ψ₂. As a result, the light B incident on the intermediate image forming unit 360 becomes an image display light distributed between the light B1 heading for a third reflection point 403 and the light B2 heading for a fourth reflection point 404 with a chief ray B0 at its center.

It is to be noted here that the concave lens 364 in the present embodiment is disposed in a position decentered vertically (in a vertical direction in FIG. 4) with respect to the z direction. More specifically, the axis of the concave lens 364 is located lower than the center position of the diffusing screen 362. For this reason, the angle θ₂ of the chief ray B0 emitted from the lower end 372 farther from the axis of the concave lens 364 is larger than the angle θ₁ of the chief ray A0 emitted from the upper end 371 closer to the axis of the concave lens 364. Also, the concave lens 364 in the present embodiment is so structured that the axis of the concave lens 364 is not included in a concave surface. Hence, the chief rays A₀ and B₀ are both emitted slanting upward (in y direction).

Hereinbelow, a description is given of advantageous effects achieved by the intermediate image forming unit 360 according to the present embodiment.

The intermediate image forming unit 360 according to the present embodiment has a diffusing screen 362 that controls the light distribution angle of the chief rays to produce the image display light having predetermined light distribution angles ψ₁ and ψ₂ with respect to the chief rays A0 and B0, respectively. Thus, even when there is shifting in the viewpoint position, a virtual image having a certain brightness can be presented so long as the shifting is within a prescribed range. Also, the image display light can be used highly efficiently if the diffusing screen 362 is selected such that the light distribution angles ψ₁ and ψ₂ are within a range between the first reflection point 401 and the second reflection point 402 and a range between the third reflection point 403 and the fourth reflection point 404, respectively, of the projection mirror 400. If the light distribution angle is narrower than this range of reflection points, the range of viewpoints for which the bright virtual image 450 can be presented will be narrowed. On the other hand, if the light distribution angle is wider than this range of reflection points, the proportion of the image display light not reflected by the projection mirror 400 will increase and consequently the virtual image 450 presented to the user will become dimmer. Thus, bright virtual image 450 can be presented to the user highly efficiently with enhanced visibility of the virtual image 450 if the light distribution angles ψ₁ and ψ₂ are controlled properly.

Also, the intermediate image forming unit 360 has a concave lens 364 that controls the directions of the chief rays A0 and B0 having passed through the intermediate image forming unit 360. With the concave lens 364 provided as part of the intermediate image forming unit 360, the virtual image 450 presented to the user can be made larger even when a distance D between the intermediate image forming unit 360 and the projection mirror 400 has to be shortened. Hence, the provision of the concave lens 364 can make the size of the optical unit 100 smaller, present larger virtual image 450, and enhance the visibility of the virtual image 450.

Also, the intermediate image forming unit 360 is disposed with the concave lens 364 decentered vertically. Because of this arrangement, the virtual image 450 can be presented in a position slightly dislocated vertically, not dead ahead in the line of sight of the user. This results from a difference in angle between the light to show the upper end 451 of the virtual image 450 and the light to show the lower end 452 of the virtual image 450. The dislocation of the virtual image 450 vertically can present the virtual image 450 in a position easier for the user to see and enhance the visibility of the virtual image 450. Also the use of the concave lens decentered vertically can make the optical unit 100 smaller.

The present invention has been described by referring to each of the above-described embodiments. However, the present invention is not limited to the above-described embodiments only, and those resulting from any combination of them or substitution as appropriate are also within the scope of the present invention.

### (First Modification)

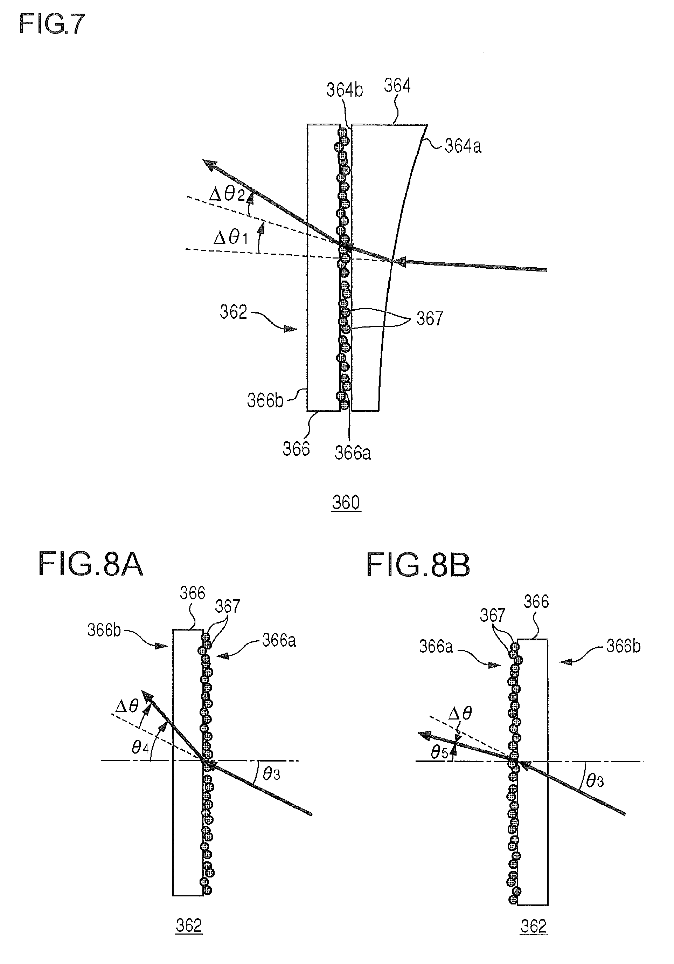

FIG. 7 shows an intermediate image forming unit 360 according to a first modification. In the first modification, a transmission-type screen, where diffusion beads 367 are provided on a first main surface 366a of a base member 366, is used as the diffusing screen 362. In this configuration, the image display light is made to enter a first main surface 366a side where the diffusion beads 367 are provided, so that the direction of the chief ray of the image display light is controlled in the diffusing screen 362 as well.

The diffusing screen 362 has the base member 366 and a plurality of diffusion beads 367. The base member 366 is a flat plate constituted by a transparent resin material or the like, and has a first main surface 366a and a second main surface 366b that face each other. The diffusion beads 367 are highly transparent beads suitable for optical use, and the diameter of each bead is 10 micrometers or less. The diffusion beads 367 are applied on the first main surface 366a of the base member 366 with the thickness ranging from 10 to 15 micrometers.

The diffusing screen 362 and the concave lens 364 are arranged such that the first main surface 366a, where the diffusion beads 367 are provided, is positioned counter to a flat surface 364b of the concave lens 364. In this configuration, light incident on a curved surface 364a is such that the angle of a chief ray of the light is first changed by Δθ₁ at the interface thereof and then enters the first main surface 366a, which is the bead surface of the diffusing screen 361. The image display light incident obliquely on the bead surface is such that the angle of the image display light is further changed by Δθ₂ and then emits from the second main surface 366b. At this time, having the image display light enter the bead surface obliquely allows the direction of the image display light to be controlled such that the inclination of the chief ray can be further increased.

FIGS. 8A and 8B each shows a relation between an angle θ₃ of light entering the diffusing screen 362 and angles θ₄ and θ₅ of light transmitting through the diffusing screen 362. FIG. 8A shows a case where the light enters the first main surface 366a, which is the bead surface, and FIG. 8B shows a case where the light enters the second main surface 366b, which is not the bead surface. When the light is made to enter through the first main surface 366a, which is the bead surface, the angle of the chief ray is changed to an emission angle θ₄, which is larger than an incidence angle θ₃ by Δθ. When, on the other hand, the light is made to enter through the second main surface 366b, which is not the bead surface, the angle of the chief ray is changed to an emission angle θ₅, which is smaller than the incidence angle θ₃ by Δθ. This is because the degree to which the angle varies differs between when the light enters the diffusion beads 367 constituting a sphere and then the angle thereof varies and when it emits therefrom and then the angle thereof varies.

In the first modification, the diffusing screen 362 and the concave lens 364 are arranged such that the bead surface of the diffusing screen 362 is positioned counter to the flat surface 364b of the concave lens 364, so that the inclination of the chief ray of the image display light, which has passed through the intermediate image forming unit 360, can be made larger. This can enlarge the virtual image 450 presented to the user. Thus, in the first modification, the diffusing screen 362 may take on the function of controlling the direction of the chief ray thereof.

### (Second Modification)

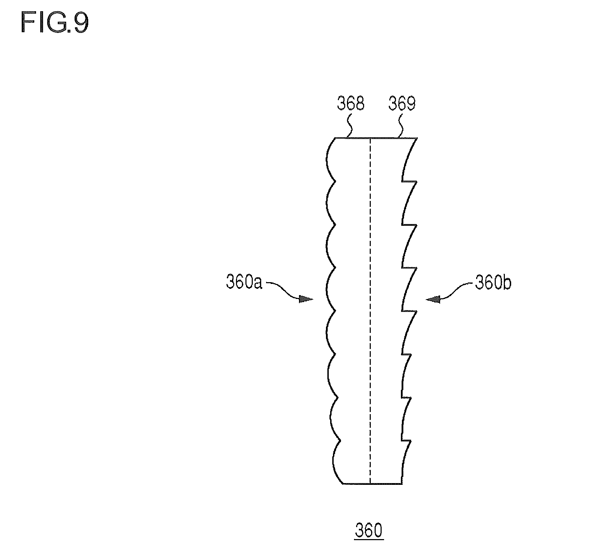

FIG. 9 shows an intermediate image forming unit 360 according to a second modification. In the second modification, a microlens array 368 is used in substitution for the diffusing screen 362, and a Fresnel lens 369 is used as the concave lens 364. The microlens array 368 and the Fresnel lens 369 are formed integrally with each other. The microlens array is formed on a first surface 360a of the intermediate image forming unit 360, whereas the Fresnel lens is formed on a second surface 360b thereof. In this configuration, the Fresnel lens 369 controls the direction of the chief ray of the image display light, and the microlens array 368 controls the distribution angle of the image display light.

In a modification to the second modification, the diffusing screen 362 or the concave lens 364 described in the above embodiments may be combined with the microlens array 368 or the Fresnel lens 369. For example, the concave lens 364 may be used as the means for controlling the direction of the chief ray, and the microlens array 368 may be used as the means for controlling the distribution angle of the chief ray. Also, the Fresnel lens 369 may be used as the means for controlling the direction of the chief ray, and the diffusing screen 362 may be used as the means for controlling the distribution angle of the chief ray.

### (Third Modification)

In the above-described embodiments and modifications, an exemplary configurations is shown where the concave lens 364 is arranged in front of the diffusing screen 362 as the intermediate image forming unit 360, namely where the image display light having passed through the concave lens 364 enters the diffusing screen 362. In still another modification, the order in which the diffusing screen 362 and the concave lens 364 are arranged may be reversed. In such a case, optical elements are arranged in the order of the intermediate mirror 350, the diffusing screen 362, the concave lens 364 and the projection mirror 400 between the intermediate mirror 350 and the projection mirror 400. Even though the direction of the intermediate image forming unit 360 is reversed, the diffusing screen 362 controls the distribution angle of the image display light, and the concave lens 364 controls the direction of the chief thereof, so that a highly visible virtual image 450 can be presented.

### [Explanation of Reference Numerals]

- 10: Head-up display
- 50: Control unit
- 100: Optical unit
- 210: Image projection unit
- 350: Intermediate mirror
- 360: Intermediate image forming unit
- 362: Diffusing screen
- 364: Concave lens
- 366: Base member
- 368: Microlens array
- 370: Real image
- 400: Projection mirror
- 450: Virtual image
- 610: Windshield

### [Industrial Applicability]

By employing an image display apparatus according to the present embodiments, the visibility of display light can be enhanced while the apparatus is downsized.

## Claims

1. An image display apparatus comprising:
an image projection unit that projects image display light;
an intermediate image forming unit that forms a real image based on the image display light projected from the image projection unit; and
a projection mirror that reflects the image display light, which has passed through the intermediate image forming unit, toward a surface for presenting a virtual image,
wherein the intermediate image forming unit has a first means that controls a direction of a chief ray of the image display light, which has passed through the intermediate image forming unit, and a second means that controls a light distribution angle of the chief ray thereof.

2. The image display apparatus according to claim 1, wherein the first means is a concave lens, and the second means is a diffusing screen that diffuses the image display light, which has passed through the intermediate image forming unit.

3. The image display apparatus according to claim 1, wherein the first means is a concave lens, and the second means is a microlens array.

4. The image display apparatus according to claim 2, the diffusing screen including:
a base member having a main surface; and
a plurality of diffusion beads provided on the main surface,
wherein the diffusion screen is arranged in a direction such that the image display light projected therefrom enters the main surface.

5. The image display apparatus according to any one of claim 2 to claim 4, wherein, when an axial direction of the concave lens is denoted by a z-axis direction,
when a direction perpendicular to both the z-axis direction and a direction where the chief ray passes therethrough is denoted by an x-axis direction, and
when a direction perpendicular to both the z direction and the x-axis direction is denoted by a y-axis direction,
the concave lens is disposed in a position decentered in the y-axis direction.

6. The image display apparatus according to claim 5, wherein an axis of the concave lens is disposed in a lower position decentered in the y-axis direction than a center position of the diffusing screen.
